# EUROPÄISCHE PATENTANMELDUNG

(11) **EP 1 405 739 A1**
(43) Veröffentlichungstag der Anmeldung: **07.04.2004**
(21) Anmeldenummer: 02102405.4
(22) Anmeldetag: 01.10.2002
(51) Int. Cl.: B60G 3/26, B60G 3/24

(54) **Radaufhängung für ein Kraftfahrzeug**

(71) Anmelder: Ford Global Technologies, Inc., A subsidiary of Ford Motor Company, Dearborn, Michigan 48126 (US)
(72) Erfinder: Frantzen, Michael Johannes, 52076 Aachen (DE); David, Wolfgang, Dr., 52074 Aachen (DE); van der Jagt, Pim, 6132 SL Sittard (NL); Ohra-aho, Lauri Mikael, 52074 Aachen (DE)
(74) Vertreter: Drömer, Hans-Carsten, Dr.-Ing.

(57) **Zusammenfassung**

Die Erfindung betrifft eine lenkbare Radaufhängung für ein Kraftfahrzeug. Dabei ist ein Radträger (8) über einen unteren Lenker (1) mit dem Fahrzeugaufbau und über einen oberen Lenker (5) mit einem Federbein (3) verbunden. Das Federbein ist weiterhin mit seiner Kolbenstange (3c) am Fahrzeugaufbau und mit dem unteren Ende seines Zylinders (3a) mit dem unteren Lenker (1) gelenkig verbunden. Die durch die Kugelgelenke (2, 6) am Radträger (8) verlaufende Lenkdrehachse (L) kann bei diesem Aufbau dicht am Radzentrum (Z) vorbeigeführt werden, so daß störende Lenkdrehmomente minimiert werden.

## Beschreibung

Die Erfindung betrifft eine Radaufhängung für ein Kraftfahrzeug, enthaltend:
a) einen Radträger, an welchem ein Rad drehbar montiert werden kann;
b) mindestens einen unteren Lenker, welcher einerseits in einem ersten Gelenk am Radträger und andererseits am Fahrzeugaufbau oder Hilfsrahmen angelenkt ist;
c) ein Federbein, welches einen Zylinder und eine darin geführte Kolbenstange umfaßt und welches einerseits am unteren Lenker und andererseits am Fahrzeugaufbau angelenkt ist;
d) mindestens einen oberen Lenker, welcher einerseits in einem zweiten Gelenk am Radträger und andererseits am Federbein angelenkt ist.

Eine Radaufhängung der eingangs genannten Art ist aus der US 4 966 385 bekannt. Dabei ist der obere Lenker einerseits über ein Kugelgelenk mit dem Radträger und andererseits über ein Scharniergelenk mit dem Zylinder des Federbeins verbunden. Weiterhin ist der Zylinder des Federbeins am Fahrzeugaufbau und die Kolbenstange des Federbeins am unteren Lenker angekoppelt. Schließlich ist der untere Lenker über eine Gummihülse am Radträger gelagert. Mit dem beschriebenen Aufbau soll erreicht werden, daß sich die Neigung des Rades gegenüber der Vertikalen (sog. Sturz) bei einem Einfedern des Rades, d.h. seiner vertikalen Bewegung nach oben, verhältnismäßig stark ändert. Eine Lenkung ist bei einer derartigen Radaufhängung nicht möglich.

Des Weiteren ist aus dem Stand der Technik die sogenannte McPherson-Achse als Radaufhängung bekannt, bei welcher der Radträger am Fahrzeugaufbau einerseits über einen unteren Querlenker angelenkt und andererseits über ein Federbein abgestützt ist. Bei der lenkbaren Ausführung einer solchen McPherson-Achse tritt das Problem auf, daß die Lenkdrehachse, um welche das Rad bei einer Lenkbewegung geschwenkt wird, in verhältnismäßig großem Abstand zum Radzentrum verläuft. Auf das Rad einwirkende Kräfte erzeugen über diesen Abstand als Hebelachse sogenannte Lenkdrehmomente auf die Lenkung, welche als unangenehm und störend empfunden werden können.

Vor diesem Hintergrund war es Aufgabe der vorliegenden Erfindung, eine Radaufhängung für ein Kraftfahrzeug bereitzustellen, welche einen einfachen Aufbau aufweist, der vorzugsweise kompatibel mit einer herkömmlichen McPherson-Achse sein soll und der eine Lenkung des Rades mit möglichst geringem Lenkdrehmoment erlaubt.

Diese Aufgabe wird durch eine Radaufhängung mit den Merkmalen des Anspruchs 1 gelöst.

Vorteilhafte Ausgestaltungen sind in den Unteransprüchen enthalten.

Die erfindungsgemäße lenkbare Radaufhängung für ein Kraftfahrzeug enthält einen Radträger, an welchem ein Rad um seine Radachse drehbar montiert werden kann. An den Radträger ist mindestens ein unterer Lenker in einem ersten Gelenk angekoppelt, welcher weiterhin am Fahrzeugaufbau angelenkt (d.h. gelenkig hiermit verbunden) ist. Zur Abstützung enthält die Radaufhängung weiterhin ein Federbein mit einem Zylinder und einer darin geführten Kolbenstange, wobei das Federbein einerseits am unteren Lenker und andererseits am Fahrzeugaufbau angelenkt ist. Mindestens ein oberer Lenker ist einerseits in einem zweiten Gelenk am Radträger und andererseits am Federbein angelenkt. Die Radaufhängung ist dadurch gekennzeichnet, daß das Federbein mit seinem Zylinder am oberen und unteren Lenker und mit seiner Kolbenstange am Fahrzeugaufbau angelenkt ist. Weiterhin ist die Radaufhängung dadurch gekennzeichnet, daß das erste Gelenk zwischen Radträger und unterem Lenker sowie das zweite Gelenk zwischen Radträger und oberem Lenker auf einer Achse liegen, wobei diese Gelenke derart ausgestaltet sind, daß diese eine Drehung des Radträgers um diese Achse erlauben, und wobei die genannte Achse die Lenkdrehachse der Radaufhängung bildet.

Der beschriebene Aufbau der Radaufhängung ist durch die entsprechende Ausbildung von erstem und zweitem Gelenk am Radträger lenkbar um die Lenkdrehachse. Dabei ist von Vorteil, daß im Vergleich zu einer herkömmlichen McPherson-Achse die Lenkdrehachse sehr nahe am Radzentrum entlanggeführt werden kann, da das erste Gelenk, durch welches die Lenkdrehachse zwangsläufig verläuft - anders als bei der McPherson-Achse - nicht direkt am Federbein sitzt, sondern über den oberen Lenker hiervon beabstandet ist. Das erste Gelenk kann somit erheblich dichter an das Radzentrum herangeführt werden. Demgegenüber sind bei der McPherson-Achse der Annäherung des Federbeins an das Radzentrum Grenzen gesetzt, da das Federbein einerseits groß ist und andererseits überwiegend außerhalb des Radbereiches in Verbindung zum Fahrzeugaufbau angeordnet werden muß. Weiterhin ist von Vorteil, daß sowohl der untere als auch der obere Lenker beide am Zylinder des Federbeins angekoppelt sind, so daß zwischen ihren Befestigungspunkten ein konstanter Abstand besteht. Dieser kann verhältnismäßig klein gestaltet werden, um die beiden Lenker nahe beieinander anzuordnen und so das erste Gelenk und das zweite Gelenk möglichst dicht an die Radmitte bringen zu können. Die Lagerung der Kolbenstange des Federbeins am Fahrzeugaufbau entspricht den Verhältnissen der herkömmlichen McPherson-Achse, so daß die erfindungsgemäße Radaufhängung bei Bedarf auch im Austausch gegen eine solche Radaufhängung eingesetzt werden kann, um zum Beispiel verschiedene Modellvarianten in einer Fahrzeugserie realisieren zu können.

Der Abstand der Lenkdrehachse vom Radzentrum wird vorzugsweise so eingestellt, daß dieser möglichst klein ist. Das bedeutet, daß die Lenkdrehachse innerhalb der im Querschnitt rechteckigen Umhüllenden des Rades am Radmittelpunkt vorbeiläuft. Bei Bedarf kann der genannte Abstand sogar zu Null werden, wenn der Radmittelpunkt zusammen mit dem ersten Gelenk und dem zweiten Gelenk auf der Lenkdrehachse liegt. In jedem Fall bedeutet der kleine Abstand jedoch ein reduziertes Lenkdrehmoment und damit ein besseres Lenkverhalten des Kraf t-fahrzeuges und eine Reduzierung des Störkrafthebelarms, verbunden mit reduzierten Störmomenten.

Vorzugsweise enthält das Federbein eine (Schrauben-)Feder, die zwischen dem Fahrzeugaufbau und dem Zylinder des Federbeins abgestützt ist. Eine derartige Feder kann mit ihrer elastischen Federkraft einer Verkürzung des Federbeines beim Einfahren der Kolbenstange in den Zylinder entgegenwirken. Weiterhin ist die Feder in verhältnismäßig großer Entfernung von dem Rad angeordnet, so daß diese dort eine kompakte Anordnung von Radaufhängung und Lenkern nicht behindert.

Das erste Gelenk zwischen Radaufhängung und unterem Lenker kann insbesondere ein Kugelgelenk sein. Ein Kugelgelenk erlaubt eine (nahezu) beliebige Drehung um alle Raumachsen, so daß sowohl Lenkbewegungen als auch durch den Fahrbahnkontakt auftretende Eigenbewegungen der Radaufhängung ermöglicht werden.

In gleicher Weise kann auch das zweite Gelenk zwischen Radaufhängung und oberem Lenker als Kugelgelenk ausgebildet werden.

Das Federbein ist vorzugsweise in einem Scharniergelenk am unteren Lenker gelenkig angekoppelt. Ein Scharniergelenk erlaubt eine Drehung nur um eine körperfeste Achse, so daß Auslenkungen in andere Richtungen unterbunden werden.

Ebenso kann der obere Lenker mit einem Scharniergelenk am Federbein gelenkig angekoppelt sein.

Der untere Lenker kann gemäß einer Weiterbildung der Erfindung mindestens zwei Arme umfassen, die an verschiedenen Punkten am Fahrzeugaufbau oder Hilfsrahmen angelenkt sind. Dabei können die beiden Arme sowohl fest miteinander verbunden als auch separat voneinander bewegbar sein, so daß faktisch zwei voneinander unabhängige untere Lenker existieren. Die Aufspaltung des unteren Lenkers in zwei Arme kann dazu benutzt werden, eine virtuelle Lenkachse aufzuspannen, um dadurch die Platzsituation des unteren Gelenkes zu verbessern.

In gleicher Weise kann auch der obere Lenker mindestens zwei Arme umfassen, die jeweils am Federbein und an der Radaufhängung angelenkt sind und die sowohl verbunden als auch unabhängig voneinander sein können.

Gemäß einer anderen Ausgestaltung der Radaufhängung verläuft der untere Lenker im Wesentlichen parallel zum oberen Lenker und das Federbein im Wesentlichen parallel zur Lenkdrehachse. Die genannten Elemente bilden somit ein Parallelogramm mit gelenkigen Eckpunkten, so daß die Parallelität auch bei Radbewegungen erhalten bleibt.

Im Folgenden wird die Erfindung mit Hilfe der Figuren beispielhaft näher erläutert.
Es zeigen:
- Fig. 1: in einer Seitenansicht eine erste Ausgestaltung einer erfindungsgemäßen Radaufhängung mit jeweils einem unteren und oberen Lenker, und
- Fig. 2: in einer Draufsicht eine zweite Ausführungsform einer erfindungsgemäßen Radaufhängung mit jeweils zwei unteren und oberen Lenkern.

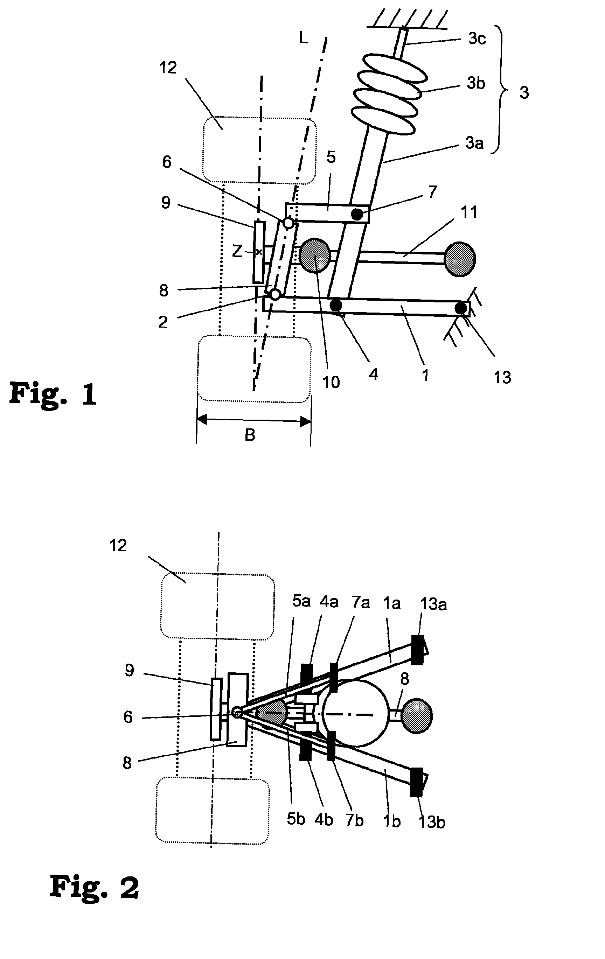

Die in Figur 1 schematisch dargestellte Radaufhängung umfaßt einen Radträger 8 (Achsschenkel), an welchem eine Nabe 9 drehbar angeordnet ist, auf welcher wiederum das punktiert angedeutete Rad 12 eines Kraftfahrzeugs montiert werden kann. Die Nabe 9 steht über ein Doppel- oder Gleichlaufgelenk 10 mit einer Welle 11 in Verbindung, über welche das Rad angetrieben werden kann.

Der Radträger 8 weist ferner in einem unteren Punkt ein Kugelgelenk 2 auf, über welches ein unterer (Quer-)Lenker 1 angelenkt ist. Der untere Lenker 1 ist mit seinem anderen Ende in einem Scharniergelenk 13, das zum Beispiel durch eine Hülse, zwei Kugelgelenke oder Gummi-Metall-Lager gebildet werden kann, am Fahrzeugaufbau oder Hilfsrahmen angelenkt.

Des Weiteren umfaßt die Radaufhängung ein Federbein 3, das in an sich bekannter Weise aus einem Außenzylinder 3a und einer darin gedämpft geführten Kolbenstange 3c besteht, wobei die Kolbenstange von einer Schraubenfeder 3b umgeben ist. Sowohl die Schraubenfeder 3b als auch die Kolbenstange 3c sind mittelbar oder unmittelbar am Fahrzeugaufbau abgestützt. Die Schraubenfeder 3b stützt sich darüber hinaus mit ihrem anderen Ende am Zylinder 3a des Federbeins ab.

Bei einer herkömmlichen McPherson-Achse ist das untere Ende des Zylinders 3a des Federbeins 3 unmittelbar am Radträger angelenkt. Dies führt dazu, daß der Anlenkpunkt einen verhältnismäßig großen Abstand vom Mittelpunkt beziehungsweise Zentrum Z des Rades hat. Da andererseits die Lenkdrehachse zwangsläufig durch den Anlenkpunkt verläuft, entsteht ein verhältnismäßig großer Hebelarm zwischen Zentrum Z und der Lenkdrehachse, welcher bei am Rad angreifenden Kräften zu störenden Lenkdrehmomenten im Lenksystem führt.

Bei der erfindungsgemäßen Radaufhängung ist demgegenüber der Zylinder 3a des Federbeins 3 nicht direkt am Radträger 8 angelenkt, sondern indirekt über den unteren Lenker 1 sowie einen oberen Lenker 5. Speziell ist der Zylinder 3a an seinem unteren Ende in einem Scharniergelenk 4 mit dem unteren Lenker 1 verbunden und darüber hinaus in einem etwa mittig am Zylinder 3a gelegenen weiteren Scharnier- oder Kugelgelenk 7 mit einem oberen (Quer-)Lenker 5 gekoppelt. Die Schwenkachse der beiden Scharniergelenke 4 und 7 verläuft im wesentlichen parallel zur Fahrzeuglängsachse, wobei abweichend davon durch ein Winkel auch das Nickverhalten beim Beschleunigen oder Bremsen beeinflußt werden kann. Der obere Lenker 5 ist an seinem anderen Ende in einem Kugelgelenk 6 mit dem Radträger 8 gekoppelt.

Die Verbindungslinie zwischen dem ersten Kugelgelenk 2, das den Radträger 8 mit dem unteren Lenker 1 verbindet, und dem zweiten Kugelgelenk 6, das den Radträger 8 mit dem oberen Lenker 5 verbindet, stellt gleichzeitig die Lenkdrehachse L der Radaufhängung dar. D.h., daß der Radträger 8 und zusammen mit ihm das gesamte Rad im Zuge einer über ein nicht näher dargestelltes Lenksystem verursachten Lenkbewegung um die Lenkdrehachse L geschwenkt werden kann. Aufgrund der erfindungsgemäßen Konstruktion, bei welcher das erste und das zweite Gelenk 2 bzw. 6 über den unteren und oberen Lenker 1 bzw. 5 vom Federbein 3 beabstandet sind, kann die Lenkdrehachse L dabei sehr dicht an das Radzentrum Z herangeführt werden. Typischerweise ist der Abstand der Lenkdrehachse L vom Radzentrum Z kleiner als die halbe Radbreite B, und theoretisch ist es sogar möglich, die Lenkdrehachse durch das Radzentrum Z verlaufen zu lassen. Hierdurch können die störenden Lenkdrehmomente auf ein Minimum reduziert werden.

Von Vorteil ist bei der erfindungsgemäßen Radaufhängung ferner, daß sie fahrzeugseitig dieselben Anlenkpunkte und Lager besitzt wie eine herkömmliche Mc-Pherson-Achse. Es ist daher möglich, bei einer bestimmten Fahrzeugserie die Fahrzeuge wahlweise mit unterschiedlichen Radaufhängungen auszustatten, um auf diese Weise Modelle unterschiedlicher Leistungsklassen anbieten zu können.

In Figur 2 ist eine abgewandelte Ausführungsform der erfindungsgemäßen Radaufhängung dargestellt, wobei gleiche Teile wie in Figur 1 dieselben Bezugsziffern tragen. Der in der Draufsicht erkennbare Unterschied zur Radaufhängung von Figur 1 besteht darin, daß sowohl der untere Querlenker als auch der obere Querlenker jeweils aus zwei Armen 1a und 1 b beziehungsweise 5a und 5b besteht. Diese Arme sind V-förmig angeordnet, wobei sie ausgehend von mindestens einem gemeinsamen Gelenkpunkt am Radträger 8 sich in Richtung auf den Fahrzeugaufbau auseinander spreizen und dort jeweils in einem Scharnier- oder Kugelgelenk 13a beziehungsweise 13b (unterer Lenker 1a, 1b) sowie 7a beziehungsweise 7b (oberer Lenker 5a, 5b) gelagert sind. Weiterhin ist das Federbein 3 in zwei Scharnier- oder Kugelgelenken 4a und 4b an den unteren Querlenkern 1a und 1 b angelenkt. Die doppelarmige Ausführung des unteren und oberen Lenkers gewährleistet mehr Platz durch Einsatz einer virtuellen Lenkachse.

## Patentansprüche

1. Radaufhängung für ein Kraftfahrzeug, enthaltend:
a) einen Radträger (8), an welchem ein Rad (12) drehbar montiert werden kann;
b) mindestens einen unteren Lenker (1, 1 a, 1 b), welcher einerseits in einem ersten Gelenk (2) am Radträger (8) und andererseits am Fahrzeugaufbau angelenkt ist;
c) ein Federbein (3), welches einen Zylinder (3a) und eine darin geführte Kolbenstange (3c) umfasst und welches einerseits am unteren Lenker (1, 1a, 1 b) und andererseits am Fahrzeugaufbau angelenkt ist;
d) mindestens einen oberen Lenker (5, 5a, 5b), welcher einerseits in einem zweiten Gelenk (6) am Radträger (8) und andererseits am Federbein (3) angelenkt ist;
**dadurch gekennzeichnet, daß**
das Federbein (3) mit dem Zylinder (3a) am unteren (1, 1a, 1b) und am oberen Lenker (5, 5a, 5b) und mit der Kolbenstange (3c) am Fahrzeugaufbau angelenkt ist, und dass das erste Gelenk (2) und das zweite Gelenk (6) auf einer Achse (L) liegen, um welche sie eine Drehung erlauben und welche die Lenkdrehachse (L) der Radaufhängung bildet.

2. Radaufhängung nach Anspruch 1,
**dadurch gekennzeichnet, daß**
der Abstand der Lenkdrehachse (L) vom Radzentrum (Z) kleiner als die halbe Radbreite (B) ist.

3. Radaufhängung nach Anspruch 1 oder 2,
**dadurch gekennzeichnet, daß**
das Federbein (3) eine Feder (3b) aufweist, die einerseits am Fahrzeugaufbau und andererseits am Zylinder (3a) abgestützt ist.

4. Radaufhängung nach mindestens einem der Ansprüche 1 bis 3,
**dadurch gekennzeichnet, daß**
das erste Gelenk (2) als Kugel- oder Scharniergelenk ausgebildet ist.

5. Radaufhängung nach mindestens einem der Ansprüche 1 bis 4,
**dadurch gekennzeichnet, daß**
das zweite Gelenk (6) als Kugel- oder Scharniergelenk ausgebildet ist.

6. Radaufhängung nach mindestens einem der Ansprüche 1 bis 5,
**dadurch gekennzeichnet, daß**
das Federbein (3) in einem Scharniergelenk (4, 4a, 4b) oder zwei Kugelgelenken am unteren Lenker (1, 1a, 1b) angelenkt ist.

7. Radaufhängung nach mindestens einem der Ansprüche 1 bis 6,
**dadurch gekennzeichnet, daß**
das Federbein (3) in einem Scharniergelenk (7, 7a, 7b) oder zwei Kugelgelenken am oberen Lenker (5, 5a, 5b) angelenkt ist.

8. Radaufhängung nach mindestens einem der Ansprüche 1 bis 7,
**dadurch gekennzeichnet, daß**
der untere Lenker zwei Arme (1a, 1 b) umfasst.

9. Radaufhängung nach mindestens einem der Ansprüche 1 bis 8,
**dadurch gekennzeichnet, daß**
der obere Lenker zwei Arme (5a, 5b) umfasst.

10. Radaufhängung nach mindestens einem der Ansprüche 1 bis 9,
**dadurch gekennzeichnet, daß**
der untere Lenker (1, 1a, 1b) im Wesentlichen parallel zum oberen Lenker (5, 5a, 5b) und das Federbein (3) im Wesentlichen parallel zur Lenkdrehachse (L) verläuft.
